# EUROPEAN PATENT APPLICATION

(11) **EP 4 831 809 A1**
(43) Date of publication of application: **28.10.2026**
(21) Application number: 26164834.9
(22) Date of filing: 13.03.2026
(51) Int. Cl.: G06F 9/50

(54) **METHODS AND SYSTEMS TO RECOMMEND CLOUD ARCHITECTURE FOR HPC APPLICATIONS AND WORKLOAD**

(30) Priority: 21.04.2025 IN 202521038240
(71) Applicant: Tata Consultancy Services Limited, Maharashtra (IN)
(72) Inventor: KULKARNI, Rajesh Gopalrao, 411057 Pune, Maharashtra (IN); GAMERIA, Pradeep, 453112 Indore, Madhya Pradesh (IN); CHAHAL, Dheeraj, 411006 Pune, Maharashtra (IN)
(74) Representative: Goddar, Heinz J.

(57) **Abstract**

The disclosure relates generally to methods and systems to recommend cloud architecture for HPC applications and workload. Current technologies exhibit several limitations when addressing the complexities of selecting optimal architectures and predicting application performance. The present disclosure solves the technical problems in the art with the methods and systems to recommend cloud architecture for HPC applications workload. The methods and systems of the present disclosure provide a unified, adaptive framework that systematically addresses the technology gaps, by leveraging profiling data, generating a wide space of possible architectures. The method involves generating the cloud architecture configuration space upon which the application can utilize resources optimally, filtering the architecture configuration based on the profiling data, predicting the execution time of the application on cloud and estimation of a cost for that execution, and recommending the best/optimal architectures of cloud services like compute instances, storage and network services for the application.

## Description

### CROSS REFERENCE TO RELATED APPLICATIONS AND PRIORITY

The present application claims priority to Indian application no. 202521038240 filed on April 21, 2025.

### TECHNICAL FIELD

The disclosure herein generally relates to high-performance computing (HPC), and, more particularly, to methods and systems to recommend cloud architecture for HPC applications and workload.

### BACKGROUND

Traditionally, high-performance computing (HPC) applications are executed on on-premise clusters as the execution time of these applications/tasks/jobs range from a few hours to a few days. The HPC applications also require multiple servers for the execution. Dedicated clusters of such servers are costly to acquire, and maintenance of these clusters increases efforts and operational costs. Migrating these tasks/jobs to the cloud has several advantages such as providing on demand resources, eliminating the need to preplan resource capacity and risk of resources unavailability, reduction in operation costs due to pay per use model, eliminating maintenance efforts, and also providing balance between the on-premise and the cloud capacity. On the cloud, there are several options available of different cloud service providers (CSPs) and different cloud services for users to try for their applications.

Finding out a best/optimal combination of such cloud services with the best architecture configuration on the cloud for the given application is a challenging task. Current technologies and frameworks for cloud-based HPC applications exhibit several limitations when addressing the complexities of selecting optimal architectures, predicting application performance, and tailoring recommendations to diverse user requirements. Some of the key limitations include lack of dynamic architecture assessment, limited automation in the architecture selection, inadequate support for user preferences for the given application, and so on.

### SUMMARY

Embodiments of the present disclosure present technological improvements as solutions to one or more of the above-mentioned technical problems recognized by the inventors in conventional systems.

In an aspect, a processor-implemented method to recommend cloud architecture for HPC applications and workload is provided. The method comprising: receiving (i) one or more cloud application profiling documents associated with one or more cloud applications, and (ii) one or more application characteristics, and one or more application parameters of an input cloud application for which one or more cloud architectures are to be recommended; generating a plurality of cloud architecture configuration specifications from one or more cloud architecture networks associated with one or more cloud architecture vendors, using a combinatorial generation algorithm, wherein each of the plurality of cloud architecture configuration specifications comprises one or more of: (i) one or more instances of number of cores, VM type, and memory size, (ii) one or more storage services consisting of file system, storage size, and (iii) one or more HPC network services; filtering the plurality of cloud architecture configuration specifications, based on the one or more cloud application profiling documents, to obtain one or more filtered cloud architecture configuration specifications; predicting an application execution time of the input cloud application against each of the one or more filtered cloud architecture configuration specifications, using the one or more application characteristics, and the one or more application parameters of the input application, by employing a trained adaptive neural network model; calculating an application cost of the input cloud application against each of the one or more filtered cloud architecture configuration specifications, based on the application execution time and a base rate of each of the one or more filtered cloud architecture configuration specifications; determining an application score of the input cloud application against each of the one or more filtered cloud architecture configuration specifications, based on the application execution time and the application cost, using a weighted function; and recommending the one or more cloud architectures for the input cloud application, using the one or more filtered cloud architecture configuration specifications, based on the application score.

In another aspect, a system to recommend cloud architecture for HPC applications and workload is provided. The system includes: a memory storing instructions; one or more Input/Output (I/O) interfaces; and one or more hardware processors coupled to the memory via the one or more I/O interfaces, wherein the one or more hardware processors are configured by the instructions to: receive (i) one or more cloud application profiling documents associated with one or more cloud applications, and (ii) one or more application characteristics, and one or more application parameters of an input cloud application for which one or more cloud architectures are to be recommended; generate a plurality of cloud architecture configuration specifications from one or more cloud architecture networks associated with one or more cloud architecture vendors, using a combinatorial generation algorithm, wherein each of the plurality of cloud architecture configuration specifications comprises one or more of: (i) one or more instances of number of cores, VM type, and memory size, (ii) one or more storage services consisting of file system, storage size, and (iii) one or more HPC network services; filter the plurality of cloud architecture configuration specifications, based on the one or more cloud application profiling documents, to obtain one or more filtered cloud architecture configuration specifications; predict an application execution time of the input cloud application against each of the one or more filtered cloud architecture configuration specifications, using the one or more application characteristics, and the one or more application parameters of the input application, by employing a trained adaptive neural network model; calculate an application cost of the input cloud application against each of the one or more filtered cloud architecture configuration specifications, based on the application execution time and a base rate of each of the one or more filtered cloud architecture configuration specifications; determine an application score of the input cloud application against each of the one or more filtered cloud architecture configuration specifications, based on the application execution time and the application cost, using a weighted function; and recommend the one or more cloud architectures for the input cloud application, using the one or more filtered cloud architecture configuration specifications, based on the application score.

In yet another aspect, there are provided one or more non-transitory machine-readable information storage mediums comprising one or more instructions which when executed by one or more hardware processors cause: receiving (i) one or more cloud application profiling documents associated with one or more cloud applications, and (ii) one or more application characteristics, and one or more application parameters of an input cloud application for which one or more cloud architectures are to be recommended; generating a plurality of cloud architecture configuration specifications from one or more cloud architecture networks associated with one or more cloud architecture vendors, using a combinatorial generation algorithm, wherein each of the plurality of cloud architecture configuration specifications comprises one or more of: (i) one or more instances of number of cores, VM type, and memory size, (ii) one or more storage services consisting of file system, storage size, and (iii) one or more HPC network services; filter the plurality of cloud architecture configuration specifications, based on the one or more cloud application profiling documents, to obtain one or more filtered cloud architecture configuration specifications; predicting an application execution time of the input cloud application against each of the one or more filtered cloud architecture configuration specifications, using the one or more application characteristics, and the one or more application parameters of the input application, by employing a trained adaptive neural network model; calculating an application cost of the input cloud application against each of the one or more filtered cloud architecture configuration specifications, based on the application execution time and a base rate of each of the one or more filtered cloud architecture configuration specifications; determining an application score of the input cloud application against each of the one or more filtered cloud architecture configuration specifications, based on the application execution time and the application cost, using a weighted function; and recommending the one or more cloud architectures for the input cloud application, using the one or more filtered cloud architecture configuration specifications, based on the application score.

In an embodiment, the one or more application characteristics comprise one or more of: one or more central processing unit (CPU)-related resource utilization metrics, one or more memory-related resource utilization metrics, one or more cache-related resource utilization metrics, one or more time-related resource utilization metrics, one or more storage related metrics, one or more network related metrics, and one or more performance related metrics, and the one or more application parameters comprise one or more of: an input workload size, a batch size, and number of iterations.

In an embodiment, generating the plurality of cloud architecture configuration specifications from the one or more cloud architecture networks associated with the one or more cloud architecture vendors, using the combinatorial generation algorithm, comprises: fetching one or more virtual machine (VM) instances, from each of the one or more cloud architecture networks associated with each of the one or more cloud architecture vendors; extracting one or more base configuration specifications and one or more vendor specific features for each of the one or more virtual machine (VM) instances, to form a plurality of VM configuration specifications; fetching one or more storage service instances and one or more network service specific instances, from each of the one or more cloud architecture networks associated with each of the one or more cloud architecture vendors, to form a plurality of storage configuration specifications and a plurality of network configuration specifications, respectively; generating a plurality of VM-storage-network combination configuration specifications, from the plurality of VM configuration specifications, the plurality of storage configuration specifications, and the plurality of network configuration specifications, using the combinatorial generation algorithm; and applying one or more validation constraints on the plurality of VM-storage-network combination configuration specifications to generate the plurality of cloud architecture configuration specifications.

In an embodiment, filtering the plurality of cloud architecture configuration specifications, based on the one or more cloud application profiling documents, to obtain the one or more filtered cloud architecture configuration specifications, comprises: extracting the one or more application characteristics and the one or more application parameters of each of the one or more cloud applications, from the one or more cloud application profiling documents, using one or more large language models (LLMs); generating one or more comparative insights of each of the one or more application characteristics by analyzing the one or more application characteristics and the one or more application parameters of each of the one or more cloud applications, using the one or more LLMs, wherein the one or more comparative insights of each of the one or more application characteristics comprises one or more of (i) a quantitative structure and (ii) one or more textual characteristics insights; generating one or more baseline configurations, based on the one or more comparative insights of each of the one or more application characteristics of each of the one or more cloud applications; and filtering the plurality of cloud architecture configuration specifications, using the one or more baseline configurations, to obtain the one or more filtered cloud architecture configuration specifications.

In an embodiment, the trained adaptive neural network model is obtained by: extracting (i) the one or more application characteristics, (ii) the one or more application parameters, and (iii) one or more machine configuration specifications, and (iv) a labelled execution time, of each of the one or more cloud applications, from the one or more cloud application profiling documents, using one or more large language models (LLMs); and training an adaptive neural network model with (i) the one or more application characteristics, (ii) the one or more application parameters, (iii) the one or more machine configuration specifications, and (iv) the labelled execution time, of each of the one or more cloud applications, to obtain a trained adaptive neural network model, wherein the adaptive neural network model comprises an input layer, a hidden layer, and a final output layer, wherein the input layer further comprises a first sub-input layer, a second sub-input layer, and a third sub-input layer, and wherein each of the first sub-input layer, the second sub-input layer, and the third sub-input layer comprises a sub-input processor, a generalized input feature vector, sub-hidden layer, and a sub-output layer, and wherein the training process comprises: passing (i) the one or more application characteristics, (ii) the one or more application parameters, (iii) the one or more machine configuration specifications, of each of the one or more cloud applications at a time, to the first sub-input layer, the second sub-input layer, and the third sub-input layer, to obtain a first intermediate weighted vector, a second intermediate weighted vector, and a third intermediate weighted vector, respectively; passing the first intermediate weighted vector, the second intermediate weighted vector, and the third intermediate weighted vector, to the hidden layer, to obtain a combined weighted vector; passing the combined weighted vector to the final output layer to obtain a predicted execution time of each of the one or more cloud applications; calculating a value of a loss function of the adaptive neural network model, based on the labelled execution time and the predicted execution time of each of the one or more cloud applications; and backpropagating and updating one or more network weights of the adaptive neural network model, based on the value of the loss function of the adaptive neural network model.

In an embodiment, the one or more machine configuration specifications of each of the one or more cloud applications comprises one or more of: (i) one or more available compute resource parameters, (ii) one or more memory resource parameters, (iii) one or more storage resource parameters, and (iv) one or more network resource parameters.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is an exemplary block diagram of a system to recommend cloud architecture for HPC applications and workload, in accordance with some embodiments of the present disclosure.
FIG. 2 is an exemplary block diagram illustrating modules of the system of FIG. 1, to recommend cloud architecture for HPC applications and workload, in accordance with some embodiments of the present disclosure.
FIGS. 3A and 3B illustrate exemplary flow diagrams of a processor-implemented method to recommend cloud architecture for HPC applications and workload, using the system of FIG. 1, in accordance with some embodiments of the present disclosure.
FIG. 4 is a flowchart showing the steps for generating a plurality of cloud architecture configuration specifications from one or more cloud architecture networks associated with one or more cloud architecture vendors, using a combinatorial generation algorithm, in accordance with some embodiments of the present disclosure.
FIG. 5 is a flowchart showing the steps for filtering the plurality of cloud architecture configuration specifications, based on the one or more cloud application profiling documents, to obtain the one or more filtered cloud architecture configuration specifications, in accordance with some embodiments of the present disclosure.
FIGS. 6A and 6B illustrate exemplary flow diagrams showing the steps for obtaining a trained adaptive neural network model, in accordance with some embodiments of the present disclosure.
FIG. 7 shows an exemplary architecture of an adaptive neural network model, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

High performance computing (HPC) makes use of computing resources such as number of central processing unit (CPU) cores, memory, and storage to gain performance greater than that of a single workstation, server, or computer. These computing resources are aggregated to form groups of individual machines (nodes) called clusters for executing the HPC applications. High-Performance Computing (HPC) applications span diverse fields, including but are not limited to scientific research, engineering simulations, Artificial Intelligence (AI), and data analysis, enabling complex computations and large-scale data processing.

Dedicated clusters of such servers are costly to acquire, and maintenance of these clusters increases efforts and operational costs. Migrating these tasks/jobs to the cloud has several advantages. However, cconventional technologies and frameworks for cloud-based HPC applications exhibit several limitations when addressing the complexities of selecting optimal architectures, predicting application performance, and tailoring recommendations to diverse user requirements. Some of the key limitations include:
- Lack of dynamic architecture assessment: Most available solutions for HPC applications rely on static profiling or heuristics that do not adapt dynamically to new applications, workloads, or evolving cloud offerings. Current frameworks do not integrate profiling data with architectural insights to systematically evaluate all potential cloud architectures comprehensively.
- Absence of predictive execution models: Predicting application execution time and cost across diverse cloud architectures is highly challenging due to variable performance across CPU types, memory configurations, network speeds, and hardware accelerators. Existing solutions lack adaptive mechanisms for forecasting execution time and cost tailored to specific applications and architectures using historical profiling data.
- Limited automation in architecture selection: Conventional techniques do not leverage Artificial Intelligence (AI) AI/machine learning (ML) to automate the identification of suitable architectures from a wide design space, especially when cloud vendors frequently update their offerings. Manual decision-making still dominates, which is both error-prone and time-consuming, particularly for complex workloads requiring multi-objective optimization (e.g., cost vs. execution time).
- Inadequate Support for user preferences: Conventional solutions today lack the ability to incorporate user-defined priorities, such as cost sensitivity, performance bias, or preferences for specific vendors or hardware types. Personalized recommendations are underdeveloped, often providing generic suggestions rather than tailored insights.
- Lack of an adaptive learning framework: Existing frameworks do not adapt to new applications by dynamically determining relevant profiling parameters and retraining predictive models to stay effective across different application domains.

The present disclosure solves the technical problems in the art with the methods and systems to recommend cloud architecture for HPC applications workload. The methods and systems of the present disclosure provides a unified, adaptive framework that systematically addresses the technology gaps, by leveraging profiling data, generating a wide space of possible architectures by combining available configurations across different cloud vendors. User-centric recommendations to optimize the selection and use of cloud architectures for HPC applications, based on their execution time and the cost. The method involves generating a likeable cloud architecture configuration space upon which the application can be able to utilize resources optimally, filtering the architecture configuration based on the profiling data, predicting the execution time of the application on cloud and estimation of a cost for that execution, and recommending the best/optimal architectures of cloud services like compute instances, storage and network services for the application.

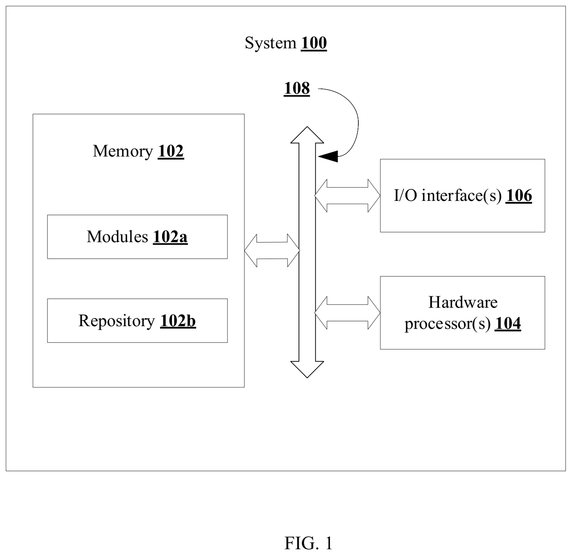

Referring now to the drawings, and more particularly to FIG. 1 through FIG. 7, where similar reference characters denote corresponding features consistently throughout the figures, there are shown preferred embodiments, and these embodiments are described in the context of the following exemplary systems and/or methods.

FIG. 1 is an exemplary block diagram of a system 100 to recommend cloud architecture for HPC applications and workload, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface (GUI), and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

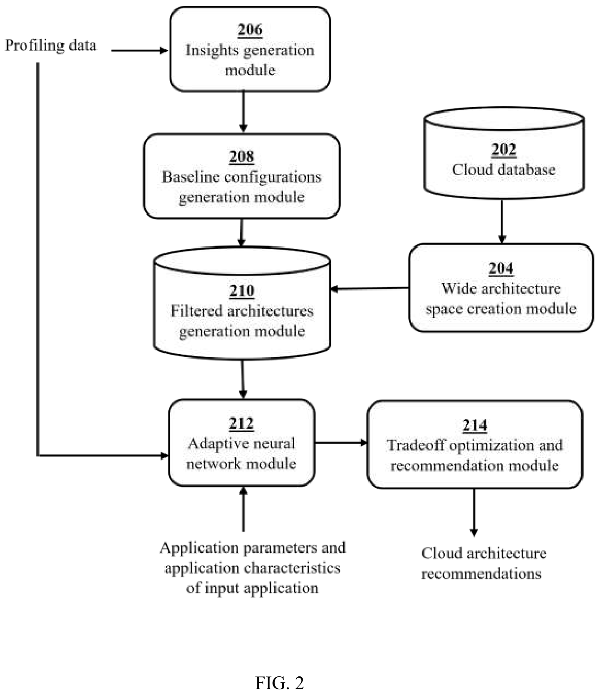

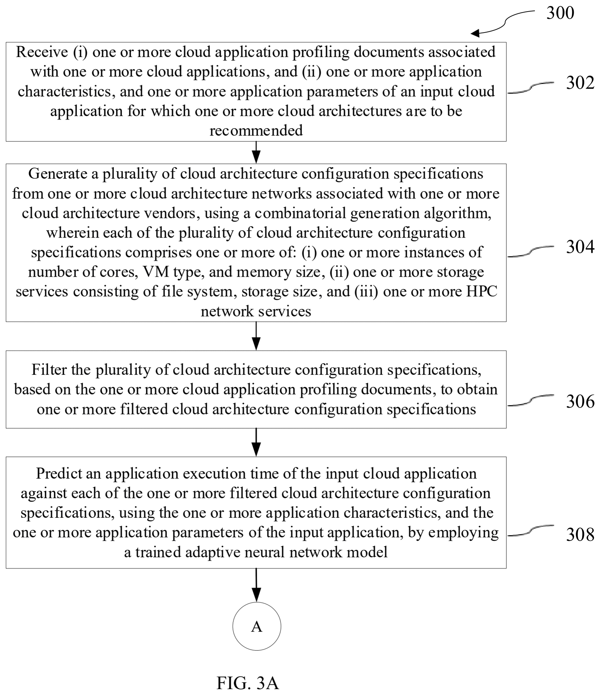

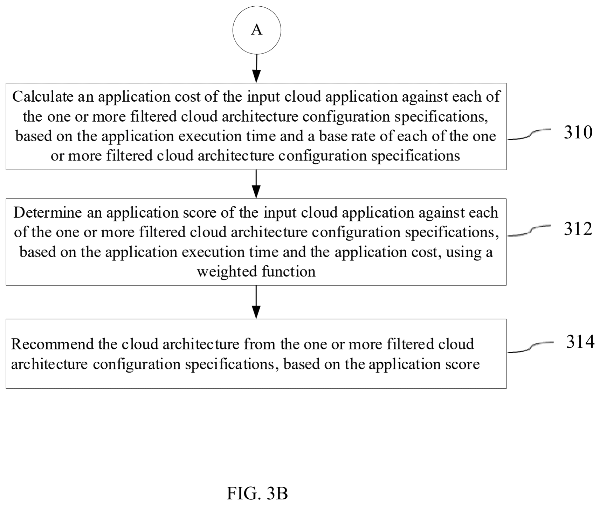

Referring collectively to FIG. 2 and FIGS. 3A and 3B, components and functionalities of the system 100 are described in accordance with an example embodiment of the present disclosure. For example, FIG. 2 is an exemplary block diagram illustrating the plurality of modules 102a of the system 100 of FIG. 1, to recommend cloud architecture for HPC applications and workload, in accordance with some embodiments of the present disclosure. In an embodiment, the plurality of modules 102a includes a cloud database 202, a wide architecture space creation module 204, an insights generation module 206, a baseline configurations generation module 208, a filtered architectures generation module 210, an adaptive neural network module 212, and a tradeoff optimization and recommendation module 214.

For example, FIGS. 3A and 3B illustrate exemplary flow diagrams of a processor-implemented method 300 to recommend cloud architecture for HPC applications and workload, using the system 100 of FIG. 1, in accordance with some embodiments of the present disclosure. Although steps of the method 300 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 302 of the method 300, the one or more input/output (I/O) interfaces 106 of the system 100 are configured to receive (i) one or more cloud application profiling documents associated with one or more cloud applications, and (ii) one or more application characteristics, and one or more application parameters of an input cloud application for which one or more cloud architectures are to be recommended.

In an embodiment, the one or more cloud application profiling documents are the profiling documents obtained from the one or more cloud applications that were already executed on the cloud or on local machine with similar cloud architectures. The one or more cloud application profiling documents are obtained upon execution of each application on the machine configuration specification of the one or more machine configuration specifications associated with a plurality of cloud architectures, on different time instances. In an embodiment, the one or more application profiling tools such as perf, collectl, vmstat are utilized to generate the one or more cloud application profiling documents. Thus, the one or more cloud applications are historical applications, and their profiling documents may be generated upon execution of the respective applications replicating their historical performance. In an embodiment, each cloud application may contain one or more profiling documents.

The one or more application characteristics, and the one or more application parameters are associated with the input cloud application for which one or more cloud architectures are to be recommended in real-time. In an embodiment, the one or more application characteristics of the input cloud application include one or more of: one or more central processing unit (CPU)-related resource utilization metrics, one or more memory-related resource utilization metrics, one or more cache-related resource utilization metrics, one or more time-related resource utilization metrics, one or more storage related metrics, one or more network related metrics, and one or more performance related metrics.

In an embodiment, the one or more central processing unit (CPU)-related resource utilization metrics include but are not limited to task-clock, CPU utilization, context-switches, and migrations. In an embodiment, the one or more memory-related resource (random access memory (RAM)) utilization metrics include but are not limited to peak usage, memory usage, and bandwidth. In an embodiment, the one or more cache-related resource utilization metrics include but are not limited to L1, L2, L3 hit/miss rates, and cache size. In an embodiment, the one or more time-related resource utilization metrics include but are not limited to execution time and run time. In an embodiment, the one or more storage related metrics include but are not limited to disk utilization, and number of read and write operations. In an embodiment, the one or more network related metrics include the network bandwidth utilization (inter node). In an embodiment, the one or more performance related metrics include the latency and throughput.

In an embodiment, the one or more application parameters of the input cloud application includes one or more of: an input workload size, a batch size, and number of iterations.

At step 304 of the method 300, the one or more hardware processors 104 of the system 100 are configured to generate a plurality of cloud architecture configuration specifications. The plurality of cloud architecture configuration specifications is generated from one or more cloud architecture networks associated with one or more cloud architecture vendors. Each of the plurality of cloud architecture configuration specifications include one or more of (i) one or more instances of number of cores, VM type, and memory size, (ii) one or more storage services consisting of file system, storage size, and (iii) one or more HPC network services. In an embodiment, the cloud database 202 comprises data about the one or more cloud architecture networks associated with one or more cloud architecture vendors.

A combinatorial generation algorithm is employed for generating the plurality of cloud architecture configuration specifications from the one or more cloud architecture networks associated with one or more cloud architecture vendors. In accordance with the present disclosure, the wide architecture space creation module 204 is configured to create the wide architecture space comprising the plurality of cloud architecture configuration specifications.

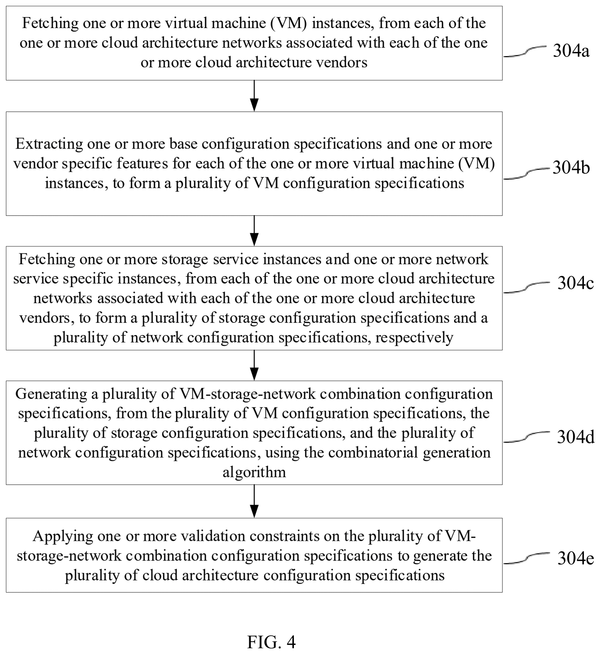

FIG. 4 is a flowchart showing the steps for generating a plurality of cloud architecture configuration specifications from one or more cloud architecture networks associated with one or more cloud architecture vendors, using a combinatorial generation algorithm, in accordance with some embodiments of the present disclosure. As shown in FIG. 4, generating the plurality of cloud architecture configuration specifications is explained through steps 304a to 304e.

At step 304a, one or more virtual machine (VM) instances are fetched from each of the one or more cloud architecture networks associated with each of the one or more cloud architecture vendors.

At step 304b, one or more base configuration specifications and one or more vendor specific features for each of the one or more virtual machine (VM) instances fetched at step 304a, are extracted to form a plurality of VM configuration specifications.

At step 304c, one or more storage service instances and one or more network service specific instances are fetched from each of the one or more cloud architecture networks associated with each of the one or more cloud architecture vendors, to form a plurality of storage configuration specifications and a plurality of network configuration specifications, respectively.

At step 304d, a plurality of VM-storage-network combination configuration specifications are generated from the plurality of VM configuration specifications, the plurality of storage configuration specifications, and the plurality of network configuration specifications, using the combinatorial generation algorithm. The combinatorial generation algorithm generates the plurality of VM-storage-network combination configuration specifications such that each of the plurality of VM-storage-network combination configuration specifications include a VM configuration out of the plurality of VM configuration specifications, a storage configuration specification out of the plurality of storage configuration specifications, and a network configuration specification out of the plurality of network configuration specifications.

Finally at step 304e, one or more validation constraints are applied on the plurality of VM-storage-network combination configuration specifications obtained at step 304d to generate the plurality of cloud architecture configuration specifications.

Exemplary steps for creating the wide architecture space comprising the plurality of cloud architecture configuration specifications is as follows:
Step 1: Initialize the Architecture Space: an empty list
Step 2: Iterate Over Cloud Service Providers
   1. fetch all available VM instances from vendors
   2. extract base specifications for each VM (CPU count, memory and others)
   3. identify vendor-specific features (for example, Azure HB-series is particularly High-Performance Instance)
   4. Step 2.1 to 2.3 gives list A
   5. Fetch all available storage service instances giving list B
   6. Fetch all available specific network service instances (like InfiniBand or their specific network fabric) if required thus giving list C
Step 3: Generate CPU-Memory-Storage-Network Combinations
   1. Iterate each instance one by one from lists A, B and C
   2. Create all combinations by iterating through all combinations of the lists
   3. Each combination is matched to real-world VM offerings before adding to the search space if there is a combination that cannot exist in real world (for example one VM instance may not support use of one specific storage or network service) that will be discarded
   4. Otherwise add to search space
Step 4: Apply Vendor-Specific Constraints
   1. Check for each vendor type
   2. Draw out all constraints from cloud database
   3. Filter search space based on these constraints
Step 5: Prune Redundant or Infeasible Configurations: Check for conditions where one type of service cannot be combined with other in practical sense and filter out search space again (for example a high CPU core count VM may not need extra storage space or other storage service).
Step 6: sort the space based on the number of instances and CPU counts for creating the wide architecture space comprising the plurality of cloud architecture configuration specifications.

At step 306 of the method 300, the one or more hardware processors 104 of the system 100 are configured to filter the plurality of cloud architecture configuration specifications generated at step 304 of the method 300, to obtain one or more filtered cloud architecture configuration specifications. The one or more filtered cloud architecture configuration specifications are obtained by filtering the plurality of cloud architecture configuration specifications, based on the one or more cloud application profiling documents received at step 302 of the method 300.

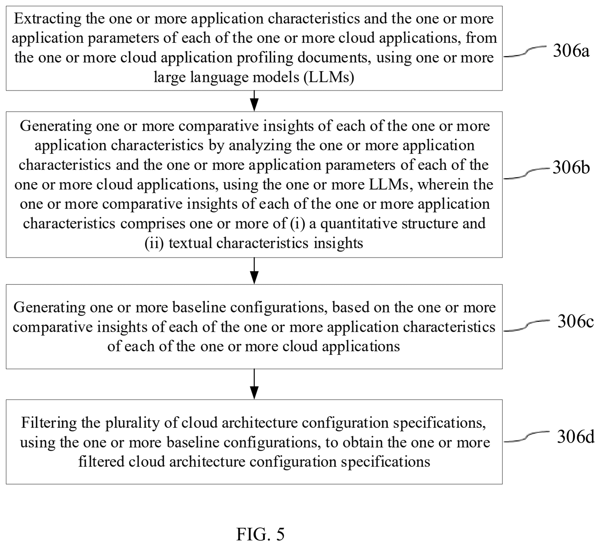

FIG. 5 is a flowchart showing the steps for filtering the plurality of cloud architecture configuration specifications, based on the one or more cloud application profiling documents, to obtain the one or more filtered cloud architecture configuration specifications, in accordance with some embodiments of the present disclosure. As shown in FIG. 5, filtering the plurality of cloud architecture configuration specifications to obtain the one or more filtered cloud architecture configuration specifications is explained through steps 306a to 306d.

At step 306a, the one or more application characteristics and the one or more application parameters of each of the one or more cloud applications, from the one or more cloud application profiling documents received at step 302 of the method 300, using one or more large language models (LLMs). The one or more application characteristics and the one or more application parameters of each of the one or more cloud applications are same as that of the one or more application characteristics and the one or more application parameters explained at step 302 of the method 300 for the input cloud application.

At step 306b, one or more comparative insights of each of the one or more application characteristics are generated by analyzing the respective one or more application characteristics and the one or more application parameters of each of the one or more cloud applications, using the one or more LLMs. The one or more comparative insights of each of the one or more application characteristics include one or more of (i) a quantitative structure and (ii) one or more textual characteristics insights. In accordance with the present disclosure, the insights generation module 206 is configured to generate the one or more comparative insights of each of the one or more application characteristics.

Exemplary steps for analyzing the application profiling documents as follows:
1. Input- Application profiling documents
2. Processing profiling logs/documents
   a. Identification of profiling tools/utility (perf, collect etc.)
   b. Capturing metrics (compute, memory, storage and network related) of application's several executions along with execution time
   c. Compare resources behavior across architectures - how resources utilization is changing dynamically across architectures
   d. Identify performance bottlenecks across architectures - such spots across architectures where some application's performance metrics are dropping. For example, in some architectures(configurations) applications may exhibit more page faults or context-switches.
   e. Study impact of each type of metric on application performance to derive insights into application characteristics
   f. Derive a report document by summarizing analysis done from step b to e
3. Output - a report document containing
   a. Insights into application characteristics into text format
   b. Tabular data capturing metrics across the architecture,

At step 306c, one or more baseline configurations are generated, based on the one or more comparative insights of each of the one or more application characteristics of each of the one or more cloud applications, generated at step 306b. In an embodiment, the one or more baseline configurations are generated based on one or more comparative insights of each of the one or more application characteristics of each of the plurality of applications, using the one or more LLMs, by prompting through correlation analysis of the application performance against resource utilization. In an embodiment, each of the one or more baseline configurations include in range for each of the number of CPU cores, memory size, storage size and a network bandwidth. In accordance with the present disclosure, the baseline configurations generation module 208 is configured to generate the one or more baseline configurations.

Exemplary steps for generating the one or more baseline configurations as follows:
Input - Comparative insights
   a. Correlate hardware specifications with execution performance - it draws pattern in term of data and graphs let's say T1
   b. Correlate different metrics along with available resources against execution performance- it draws pattern in terms of data let's say T2
   c. Compare architectures with different specifications against resource consumption by application - pattern T3
   d. Combined correlation analysis of T1, T2 and T3 against each other creating another pattern let's say T123
   e. Identification of critical resource requirements based on performance bottlenecks (i.e. where resources are under provisioned) from T123 using insights from report document
   f. Identification of over provisioned resourced from T123 based on the fact after a point application's performance does not improve even though more resources are provided
   g. Step a to f gives three categories of ranges for each resource type i.e. computes, memory, storage and network as (i) under provisioned range (ii) adequate (iii) driving over provisioned range
Output- the ranges for each resource type: A set of baseline configurations that act as a benchmark for filtering cloud architectures in further steps.

At step 306d, the plurality of cloud architecture configuration specifications is filtered using the one or more baseline configurations generated at step 306c, to obtain the one or more filtered cloud architecture configuration specifications. In accordance with the present disclosure, the filtered architectures generation module 210 is configured to generate the one or more filtered cloud architecture configuration specifications from the plurality of cloud architecture configuration specifications.

In an embodiment, a distance metric such as a weighted Euclidean distance is employed to calculate the distance between each of the one or more baseline configurations and each of the plurality of cloud architecture configuration specifications. The cloud architecture configuration specifications (of the plurality of cloud architecture configuration specifications) that are closer (having less distance) to the one or more baseline configurations are filtered, to obtain the one or more filtered cloud architecture configuration specifications.

At step 308 of the method 300, the one or more hardware processors 104 of the system 100 are configured to predict an application execution time of the input cloud application against each of the one or more filtered cloud architecture configuration specifications, using the one or more application characteristics, and the one or more application parameters of the input application. A trained adaptive neural network model is employed to predict the application execution time of the input cloud application against each of the one or more filtered cloud architecture configuration specifications.

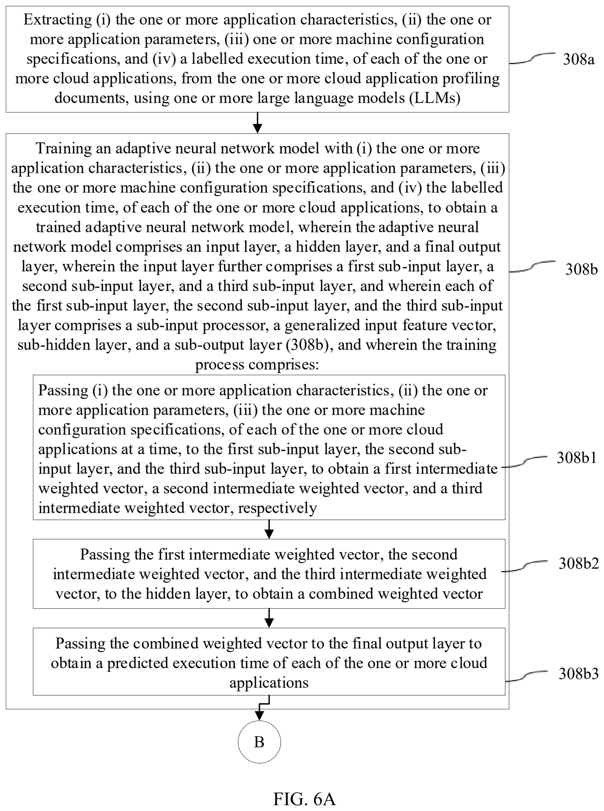

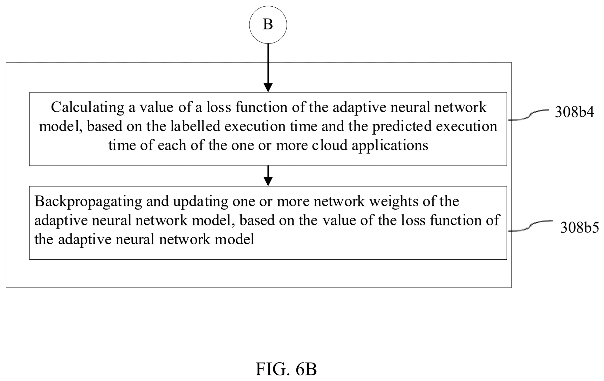

FIGS. 6A and 6B illustrate exemplary flow diagrams showing the steps for obtaining the trained adaptive neural network model, in accordance with some embodiments of the present disclosure. As shown in FIGS. 6A and 6B, obtaining the trained adaptive neural network model is explained through steps 308a to 308b.

At step 308a, (i) the one or more application characteristics, (ii) the one or more application parameters, (iii) one or more machine configuration specifications, and (iv) a labelled execution time, are extracted for each of the one or more cloud applications received at step 302 of the method 300, from the respective one or more cloud application profiling documents, using one or more large language models (LLMs). The one or more application characteristics and the one or more application parameters of each of the one or more cloud applications are already extracted at step 306a and the same may be utilized.

The one or more machine configuration specifications each of the one or more cloud applications includes one or more of: (i) one or more available compute resource parameters, (ii) one or more memory resource parameters, (iii) one or more storage resource parameters, and (iv) one or more network resource parameters. The labelled execution time is the actual execution time of each of the one or more cloud applications. Thus, the one or more application characteristics, the one or more application parameters, the one or more machine configuration specifications, and the labelled execution time, form as training data and the data associated with each cloud application (of the one or more cloud applications) form a training sample.

At step 308b, an adaptive neural network model is trained with the training data formed at step 306a and consists of (i) the one or more application characteristics, (ii) the one or more application parameters, (iii) the one or more machine configuration specifications, and (iv) the labelled execution time, of each of the one or more cloud applications, to obtain the trained adaptive neural network model.

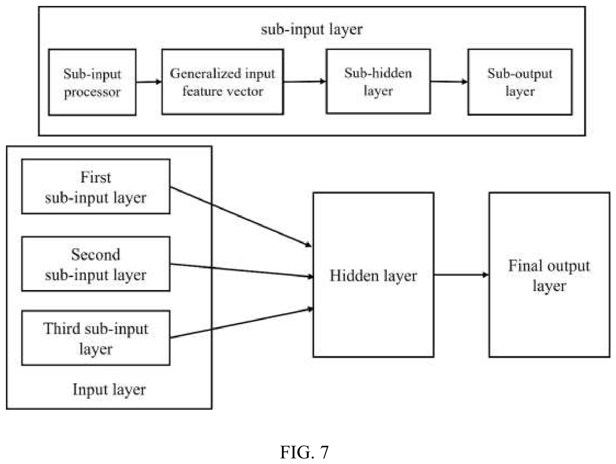

FIG. 7 shows an exemplary architecture of an adaptive neural network model, in accordance with some embodiments of the present disclosure. As shown in FIG. 7, the adaptive neural network model is a feedforward neural network (FNN) and includes an input layer, a hidden layer, and a final output layer. The input layer further includes three sub layers of a first sub-input layer, a second sub-input layer, and a third sub-input layer. As shown in sub block with 'sub-input layer, each of the first sub-input layer, the second sub-input layer, and the third sub-input layer includes a sub-input processor, a generalized input feature vector, sub-hidden layer, and a sub-output layer.

The hidden layer comprises fully connected layers with a dropout layer and Rectified Linear Unit (ReLU) activation, in a multi-layer perception (MLP) structure. The final output layer employs a supervised learning algorithm and Adaptive Moment Estimation (Adam) optimizer is used during the training. Regularization includes batch processing of training data and dropout (around 20%) is applied to take care of overfitting. Training the adaptive neural network model is further explained through steps 308b1 to 308b5.

At step 308b1, (i) the one or more application characteristics, (ii) the one or more application parameters, and (iii) the one or more machine configuration specifications, of each of the one or more cloud applications at a time (each training sample at a time), are passed to the first sub-input layer, the second sub-input layer, and the third sub-input layer of the input layer, to obtain a first intermediate weighted vector, a second intermediate weighted vector, and a third intermediate weighted vector, respectively.

The output of the sub-hidden layer present in each of the first sub-input layer, the second sub-input layer, and the third sub-input layer of the input layer, is mathematically expressed as below: ${H}_{K} = ReLU \left({Z}_{K}\right) where {Z}_{K} = {W}_{K} \times {X}_{K} + {b}_{K}$ (1) where, *W_{K}* represents weight matrix for the sub-hidden layer *K , X_{K}* represents the input feature vector for either of input category, and *b_{K}* represents bias term of the sub-hidden layer *K.*

The output of the sub-output layer present in each of the first sub-input layer, the second sub-input layer, and the third sub-input layer of the input layer, is mathematically expressed as below: ${CO}_{K} = {WO}_{K} \times {X}_{K} + {bO}_{K}$ (2) Where , *WO_{K}* is weight matrix of the sub-output layer and *bO_{K}* is bias term of sub-output layer

At step 308b2, the first intermediate weighted vector, the second intermediate weighted vector, and the third intermediate weighted vector, obtained at step 308b1 to the hidden layer, to obtain a combined weighted vector. The combined weighted vector is mathematically expressed as below: $C = \left[\begin{matrix}{CO}_{1} \\ {CO}_{2} \\ {CO}_{3}\end{matrix}\right]$ (3) Where, *CO*₁ , *CO*₂ , *CO*₃ represents the first intermediate weighted vector, the second intermediate weighted vector, and the third intermediate weighted vector respectively.

The output of the hidden layer is mathematically expressed as below: ${H}_{o} = ReLU \left(W\times C+b\right)$ (4) where *W* is the weight matrix of the hidden layer and b is bias term of the hidden layer.

At step 308b3, the combined weighted vector obtained at step 308b2 is passed to the final output layer to obtain a predicted execution time of each of the one or more cloud applications. The output of the final output layer is mathematically expressed as below: $O = {W}_{o} \times {H}_{o} + {b}_{o}$ (5) Where, *Wₒ* is the weight matrix of the final output layer and *bₒ* is the bias term of the final output layer.

At step 308b4, a value of a loss function of the adaptive neural network model, based on the predicted execution time obtained at step 308b3 and the respective labelled execution time extracted at step 308a of each of the one or more cloud applications. In an embodiment, the loss function of the adaptive neural network model is a mean square error (MSE) loss between the predicted execution time and the respective labelled execution time of each of the one or more cloud applications.

At step 308b5, one or more network weights of the adaptive neural network model are backpropagated and updated based on the value of the loss function, for the next training sample. The training process is continued either the value of the loss function is reached to a predefined error threshold, or all the training samples (all the one or more cloud applications) are completed.

The trained adaptive neural network model is then employed to predict the application execution time of the input cloud application against each of the one or more filtered cloud architecture configuration specifications. At this step, the one or more application characteristics, the one or more application parameters, and the respective filtered cloud architecture configuration specifications (with same component as that of the one or more machine configuration specifications) are passed to the first sub-input layer, the second sub-input layer, and the third sub-input layer, to obtain the first intermediate weighted vector, the second intermediate weighted vector, and the third intermediate weighted vector, respectively, of the input cloud application. In accordance with the present disclosure, the adaptive neural network module 212 is configured to predict the execution time of the input cloud application against each of the one or more filtered cloud architecture configuration specifications, using the trained adaptive neural network model.

Then, the first intermediate weighted vector, the second intermediate weighted vector, and the third intermediate weighted vector are passed to the hidden layer, to obtain the combined weighted vector. The combined weighted vector is then passed to the final output layer to predict the execution time of the input cloud application.

At step 310 of the method 300, the one or more hardware processors 104 of the system 100 are configured to calculate an application cost of the input cloud application against each of the one or more filtered cloud architecture configuration specifications, based on the application execution time predicted at step 308 of the method 300 and a base rate of each of the one or more filtered cloud architecture configuration specifications. The base rate of each of the one or more filtered cloud architecture configuration specifications refer to the usage cost or usage rate (in general measured as per hour rate) of the respective cloud architecture configuration specifications defined by the cloud service provider. In an embodiment, the application cost is calculated using equation 6: $Application cost = Application execution time \times Hourly rate$ (6)

At step 312 of the method 300, the one or more hardware processors 104 of the system 100 are configured to determine an application score of the input cloud application against each of the one or more filtered cloud architecture configuration specifications, based on the application execution time predicted at step 308 of the method 300 and the application cost determined at step 310 of the method 300.

A weighted function consisting of weights for each of the application execution time and the application cost, is employed to determine an application score of the input cloud application against each of the one or more filtered cloud architecture configuration specifications. The less the application score (overall cost), the more is the ideal filtered cloud architecture configuration specifications for the input cloud application. Similarly, the more is application score (overall cost), the less the ideal filtered cloud architecture configuration specifications for the input cloud application.

In an embodiment, the application score is determined using equation 7: 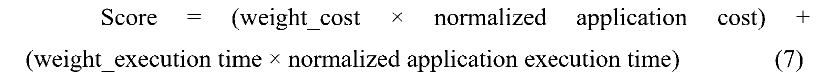 Score = (weight_cost × normalized application cost) + (weight_execution time × normalized application execution time) (7)

At step 314 of the method 300, the one or more hardware processors 104 of the system 100 are configured to recommend the one or more cloud architectures for the input cloud application, using one or more filtered cloud architecture configuration specifications, based on the application score. More specifically the cloud architectures are formed with some or all of the one or more filtered cloud architecture configuration specifications whose application score is minimum for the given input cloud application. In accordance with the present disclosure, the tradeoff optimization and recommendation module 214 is configured to create the trade-off analysis and recommend the cloud architecture from the one or more filtered cloud architecture configuration specifications.

Exemplary use case for trade-off analysis and recommendation is explained below to assist users in selecting the most suitable cloud architecture for their HPC application based on their preferences.

### User preferences:

- Cost (execution cost of the application).
- Time (execution time of the application).
- Specific hardware preference (e.g., preference for certain vendors, processors, or regions).
- Weights for cost and time: Users specify weightage for cost and time, typically adding up to 1 (e.g., Cost: 0.6, Time: 0.4).
- Hardware Bias (Optional): Users may prioritize specific hardware types, such as CPUs from AMD or Intel, or architecture from a particular cloud vendor.

### Normalization of results:

- Normalize cost and time metrics for all architectures using the formula: 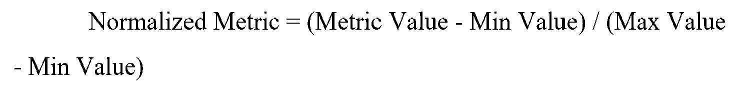 Normalized Metric = (Metric Value - Min Value) / (Max Value - Min Value)
- This ensures a consistent scale for comparison regardless of the raw values.

### Weighted Scoring Mechanism:

- Combine normalized cost and time metrics using user-defined weights: 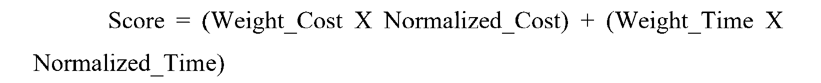 Scoe = (Weight_Cost × Normalized_Cost) + ( Weight_Time × Normalized_Time)

### Hardware Bias Adjustment:

- Add a penalty or bonus to the score if a user specifies a hardware bias.
   Example: For a user preferring AMD CPU architecture, non-AMD options may receive a penalty of 0.3 on their score.

### Recommendation Generation:

- Rank architectures based on the weighted score.
- Return the top-N architectures (e.g., top 5) as recommendations.

### Example Workflow:

- Input Preferences:
   ∘Cost Weight: 0.7, Time Weight: 0.3
   ∘ Hardware Preference: Intel CPUs
- Raw Data (Example):
   ∘Architecture A: Cost = $20, Time = 60 sec
   ∘ Architecture B: Cost = $15, Time = 90 sec
   ∘Architecture C: Cost = $25, Time = 70 sec
- Normalized Data:
   ∘ Cost: A = 0.33, B = 0.0, C = 1.0
   ∘Time: A = 0.0, B = 1.0, C = 0.5
- Weighted Scores:
   ∘ A: (0.7 X 0.33) + (0.3 X 0.0) = 0.231
   ∘ B: (0.7 X 0.0) + (0.3 X 1.0) = 0.3
   ∘ C: (0.7 X 1.0) + (0.3 X 0.5) = 0.85
- Hardware Bias:
   ∘ If preference is Intel, apply a penalty of 0.3 to scores of non-Intel architectures.
- Final Recommendation:
   ∘ Ranked List: C > B > A

The methods and systems of the present disclosure recommend the best cloud architecture of the cloud architecture configuration specifications with the cloud services like compute instances, storage, and network services whose application score is minimum for the given input cloud application, out of the available cloud architecture configuration specifications. The implementation of the present disclosure is scalable for any number of cloud configuration specifications based on the requirement of the input cloud application and adaptive and provides a user-centric optimized recommendation.

Some of the technical advantages of the present disclosure over the technical challenges (their limitations) of the conventional techniques are listed below:
- Holistic cloud architecture suitability framework: Existing technologies often focus on specific aspects of cloud performance optimization (e.g., cost reduction or workload distribution) but lack a comprehensive framework that integrates profiling, prediction, and recommendation for HPC workloads across diverse architectures. The present disclosure bridges this gap by combining profiling, adaptive prediction, and tailored recommendations into a single, cohesive process.
- Adaptive machine learning for diverse applications: Traditional approaches rely on fixed heuristics or generic performance models, which fail to adapt to the specific characteristics of an application. The adaptive ML framework of the present disclosure dynamically adjusts to the application parameters, leveraging profiling data to create tailored predictive models. This significantly enhances prediction accuracy for the execution time and cost across the cloud architectures.
- Baseline configuration and filtering mechanism: The use of profiling-driven baselines and a systematic filtering process ensures that only architectures meeting specific application and business needs (e.g., cost, performance, sustainability) are recommended. This is more efficient than exhaustive testing or reliance on vendor-provided benchmarks.
- Dynamic tradeoff analysis for recommendations: Unlike existing systems that provide static or generalized recommendations, The present disclosure incorporates user preferences (e.g., cost vs. performance priorities or hardware preferences). It offers recommendations that align closely with user-defined objectives.
- Scalable and vendor-agnostic solution: While most current tools are tied to specific cloud vendors or architectures, The present disclosure is vendor-agnostic, which enables comparison and optimization across diverse cloud offerings, creating a scalable and future-proof solution for evolving cloud ecosystems.
- Complexity of combining diverse modules: Integrating profiling, adaptive ML, and dynamic recommendation systems into a single framework requires a deep understanding of HPC workload behavior, cloud architecture nuances, and advanced machine learning. This complexity is not trivial, even for skilled professionals.
- Application-specific optimization: Most practitioners rely on general benchmarks or predefined configurations, while the present disclosure dynamically learns from application behavior. This shift from static to adaptive methodologies is a significant conceptual leap not commonly explored in traditional cloud optimization solutions.
- Innovative filtering mechanism: The idea of using profiling data to generate baseline and filter architecture dynamically, by leveraging heuristics, generation algorithms, and LLM-based insights in ways that are not part of standard optimization practices.
- User-centric tradeoff analysis: The present disclosure incorporates user preferences into a recommendation framework, with dynamic weighting and normalization of performance versus the cost. This user-centric design, adaptable to various scenarios, is beyond typical current implementations.
- Generalization across HPC Applications: Adapting the ML model to work with diverse HPC applications through an adaptive neural architecture represents a significant technical challenge. It combines domain knowledge from HPC, ML, and cloud optimization into a cohesive system.

### Example Scenario:

The methods and systems of the present disclosure were successfully validated on the AutoDock tool and recommended the best cloud architecture based on the user requirements. AutoDock is a molecular modeling simulation software (suite of automated docking tools). It is especially effective for protein-ligand docking. It is designed to predict how small molecules, such as substrates or drug candidates, bind to a receptor of known 3D structure. Over the years, it has been modified and improved to add new functionalities, and multiple engines have been developed. It is available under the GNU General Public License. It is used by the FightAIDS@Home and OpenPandemics - COVID-19 projects run at World Community Grid, to search for antivirals against HIV/AIDS and COVID-19.

AutoDock consists of two main programs: AutoDock for docking of the ligand to a set of grids describing the target protein and AutoGrid for pre-calculating these grids. In addition to using these two programs for docking, the atomic affinity grids can be visualized. This can help, for example, to guide organic synthetic chemists to design better binders. AutoDock has applications in X-ray crystallography, structure-based drug design, lead optimization, virtual screening, combinatorial library design, protein-protein docking and chemical mechanism studies. This application is a useful application in the HPC-LiveScience domain. Recommending best instances for workloads of such application can have great impact in the domain.

Table 1 shows the plurality of cloud architecture configuration specifications available from three cloud architecture vendors namely Vendor 1, Vendor 2, and Vendor 3. As shown in Table 1, there are 24 VM configurations for the AutoDock tool, 13 VM configurations from Vendor 1, 9 VM configurations from Vendor 2, and the remaining 2 VM configurations from Vendor 3.

**Table 1**

| VM Configuration | Vendor | CPUs available | Memory available (GiB) | CPU model |
|---|---|---|---|---|
| Vendor 1-C 1 | Vendor 1 | 2 | 4 | Intel(R) Xeon(R) CPU E5-2686 v4 |
| Vendor 2-C 1 | Vendor 2 | 2 | 4 | AMD EPYC 7763 64-Core |
| Vendor 2-C 2 | Vendor 2 | 2 | 4 | Intel(R) Xeon(R) Platinum 8272CL |
| Vendor 1-C 2 | Vendor 1 | 2 | 8 | Intel(R) Xeon(R) Platinum 8259CL |
| Vendor 1-C 3 | Vendor 1 | 2 | 16 | Intel(R) Xeon(R) Platinum 8259CL |
| Vendor 1-C 4 | Vendor 1 | 2 | 1 | AMD EPYC 7571 |
| Vendor 1-C 5 | Vendor 1 | 2 | 2 | AMD EPYC 7571 |
| Vendor 1-C 6 | Vendor 1 | 2 | 4 | AMD EPYC 7571 |
| Vendor 1-C 7 | Vendor 1 | 4 | 7.5 | Intel(R) Xeon(R) CPU E5-2666 v3 |
| Vendor 2-C 3 | Vendor 2 | 4 | 8 | AMD EPYC 7763 64-Core Processor |
| Vendor 2-C 4 | Vendor 2 | 4 | 16 | Intel(R) Xeon(R) Platinum 8272CL |
| Vendor 2-C 5 | Vendor 2 | 4 | 16 | Intel(R) Xeon(R) Platinum 8272CL CPU |
| Vendor 1-C 9 | Vendor 1 | 4 | 16 | AMD EPYC 7571 |
| Vendor 1-C 10 | Vendor 1 | 8 | 32 | Intel(R) Xeon(R) CPU E5-2686 v4 |
| Vendor 2-C 6 | Vendor 2 | 8 | 16 | AMD EPYC 7763 64-Core Processor |
| Vendor 2-C 7 | Vendor 2 | 8 | 32 | Intel(R) Xeon(R) Platinum 8272CL |
| Vendor 1-C 11 | Vendor 1 | 16 | 30 | Intel(R) Xeon(R) CPU E5-2666 v3 |
| Vendor 3-C 1 | Vendor 3 | 16 | 64 | Intel(R) Xeon(R) CPU @ 2.80GHz |
| Vendor 1-C 12 | Vendor 1 | 32 | 64 | AMD EPYC 7R32 |
| Vendor 3-C 2 | Vendor 3 | 32 | 128 | Intel(R) Xeon(R) CPU @ 2.80GHz |
| Vendor 1-C 13 | Vendor 1 | 64 | 128 | AMD EPYC 7R32 |
| Vendor 1-C 14 | Vendor 1 | 72 | 144 | Intel(R) Xeon(R) Platinum 8124M CPU |
| Vendor 2-C 8 | Vendor 2 | 96 | 384 | Intel Xeon Platinum 8370C |
| Vendor 2-C 9 | Vendor 2 | 96 | 384 | AMD EPYC (Milan) |

Table 2 shows the filtered cloud architecture configuration specifications after filtering the plurality of cloud architecture configuration specifications shown in Table 1. Historical application profiling data consisting of CPUs available, memory available (GiB), Available Disk (GB), CPU model, clock speed, Bogus Millions of Instructions Per Second (BogoMIPS), L1d cache, L1i cache, L2 cache, L3 cache, CPUs utilized, peak CPU utilization(%), time elapsed (seconds), task-clock(msec), context-switches, CPU-migrations, page-faults, memory used during execution (MiB), Utilized Disk IO, was considered for filtering the plurality of cloud architecture configuration specifications. As shown in Table 2, there are 13 filtered VM configurations, 6 filtered VM configurations from Vendor 1, 5 filtered VM configurations from Vendor 2, and the remaining 2 filtered VM configurations from Vendor 3.

**Table 2**

| VM Configuration | Vendor | CPU model |
|---|---|---|
| Vendor 1-C 7 | Vendor 1 | Intel(R) Xeon(R) CPU E5-2666 v3 |
| Vendor 1-C 11 | Vendor 1 | Intel(R) Xeon(R) CPU E5-2666 v3 |
| Vendor 1-C 14 | Vendor 1 | Intel(R) Xeon(R) Platinum 8124M CPU |
| Vendor 1-C 12 | Vendor 1 | AMD EPYC 7R32 |
| Vendor 1-C 10 | Vendor 1 | Intel(R) Xeon(R) CPU E5-2686 v4 |
| Vendor 2-C 3 | Vendor 2 | AMD EPYC 7763 64-Core Processor |
| Vendor 2-C 6 | Vendor 2 | AMD EPYC 7763 64-Core Processor |
| Vendor 2-C 2 | Vendor 2 | Intel(R) Xeon(R) Platinum 8272CL |
| Vendor 2-C 4 | Vendor 2 | Intel(R) Xeon(R) Platinum 8272CL |
| Vendor 2-C 7 | Vendor 2 | Intel(R) Xeon(R) Platinum 8272CL |
| Vendor 3-C 1 | Vendor 3 | Intel(R) Xeon(R) CPU @ 2.80GHz |
| Vendor 3-C 2 | Vendor 3 | Intel(R) Xeon(R) CPU @ 2.80GHz |
| Vendor 1-C 6 | Vendor 1 | AMD EPYC 7571 |

Table 3 shows the normalized execution time (application execution time), normalized cost (application cost), and the weighted score (application score) for the 13 filtered VM configurations shown in Table 2. The top 3 configurations having the less weighted score are recommended for the given AutoDock.

**Table 3**

| VM Configuration | Normalized execution time | Normalized cost | Weighted score |
|---|---|---|---|
| Vendor 1-C 7 | 0.021713955 | 0 | 0.010856977 |
| Vendor 1-C 11 | 0.09820498 | 0.053967403 | 0.076086191 |
| Vendor 1-C 14 | 0.257672264 | 0.123379816 | 0.19052604 |
| Vendor 1-C 12 | 0.309959467 | 0.154986443 | 0.232472955 |
| Vendor 1-C 10 | 0.348928778 | 0.184732204 | 0.266830491 |
| Vendor 2-C 3 | 0.585176607 | 0.125690496 | 0.355433552 |
| Vendor 2-C 6 | 0.632657788 | 0.130553321 | 0.381605554 |
| Vendor 2-C 2 | 0.184308049 | 0.687626263 | 0.435967156 |
| Vendor 2-C 4 | 0.405616676 | 0.557505363 | 0.48156102 |
| Vendor 2-C 7 | 0 | 1 | 0.5 |
| Vendor 3-C 1 | 0.753329473 | 0.356553738 | 0.554941606 |
| Vendor 3-C 2 | 0.874522293 | 0.540271818 | 0.707397056 |
| Vendor 1-C 6 | 1 | 0.649010384 | 0.824505192 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problems of recommending optimal cloud architecture for HPC applications and workload. The methods and systems of the present disclosure provides a unified, adaptive framework that systematically addresses the technology gaps, by leveraging profiling data, generating a wide space of possible architectures by combining available configurations across different cloud vendors. user-centric recommendations to optimize the selection and use of cloud architectures for HPC applications, based on their execution time and the cost.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300), comprising:
receiving, via one or more input/output (I/O) interfaces, (i) one or more cloud application profiling documents associated with one or more cloud applications, and (ii) one or more application characteristics, and one or more application parameters of an input cloud application for which one or more cloud architectures are to be recommended (302);
generating, via one or more hardware processors, a plurality of cloud architecture configuration specifications from one or more cloud architecture networks associated with one or more cloud architecture vendors, using a combinatorial generation algorithm, wherein each of the plurality of cloud architecture configuration specifications comprises one or more of: (i) one or more instances of number of cores, VM type, and memory size, (ii) one or more storage services consisting of file system, storage size, and (iii) one or more HPC network services (304);
filtering, via the one or more hardware processors, the plurality of cloud architecture configuration specifications, based on the one or more cloud application profiling documents, to obtain one or more filtered cloud architecture configuration specifications (306);
predicting, via the one or more hardware processors, an application execution time of the input cloud application against each of the one or more filtered cloud architecture configuration specifications, using the one or more application characteristics, and the one or more application parameters of the input application, by employing a trained adaptive neural network model (308);
calculating, via the one or more hardware processors, an application cost of the input cloud application against each of the one or more filtered cloud architecture configuration specifications, based on the application execution time and a base rate of each of the one or more filtered cloud architecture configuration specifications (310);
determining, via the one or more hardware processors, an application score of the input cloud application against each of the one or more filtered cloud architecture configuration specifications, based on the application execution time and the application cost, using a weighted function (312); and
recommending, via the one or more hardware processors, the one or more cloud architectures for the input cloud application, using the one or more filtered cloud architecture configuration specifications, based on the application score (314).

2. The processor-implemented method (300) as claimed in claim 1, wherein:
(i) the one or more application characteristics comprise one or more of: one or more central processing unit (CPU)-related resource utilization metrics, one or more memory-related resource utilization metrics, one or more cache-related resource utilization metrics, one or more time-related resource utilization metrics, one or more storage related metrics, one or more network related metrics, and one or more performance related metrics, and
(ii) the one or more application parameters comprise one or more of: an input workload size, a batch size, and number of iterations.

3. The processor-implemented method (300) as claimed in claim 1, wherein generating the plurality of cloud architecture configuration specifications from the one or more cloud architecture networks associated with the one or more cloud architecture vendors, using the combinatorial generation algorithm, comprises:
fetching one or more virtual machine (VM) instances, from each of the one or more cloud architecture networks associated with each of the one or more cloud architecture vendors (304a);
extracting one or more base configuration specifications and one or more vendor specific features for each of the one or more virtual machine (VM) instances, to form a plurality of VM configuration specifications (304b);
fetching one or more storage service instances and one or more network service specific instances, from each of the one or more cloud architecture networks associated with each of the one or more cloud architecture vendors, to form a plurality of storage configuration specifications and a plurality of network configuration specifications, respectively (304c);
generating a plurality of VM-storage-network combination configuration specifications, from the plurality of VM configuration specifications, the plurality of storage configuration specifications, and the plurality of network configuration specifications, using the combinatorial generation algorithm (304d); and
applying one or more validation constraints on the plurality of VM-storage-network combination configuration specifications to generate the plurality of cloud architecture configuration specifications (304e).

4. The processor-implemented method (300) as claimed in claim 1, wherein filtering the plurality of cloud architecture configuration specifications, based on the one or more cloud application profiling documents, to obtain the one or more filtered cloud architecture configuration specifications, comprises:
extracting the one or more application characteristics and the one or more application parameters of each of the one or more cloud applications, from the one or more cloud application profiling documents, using one or more large language models (LLMs) (306a);
generating one or more comparative insights of each of the one or more application characteristics by analyzing the one or more application characteristics and the one or more application parameters of each of the one or more cloud applications, using the one or more LLMs, wherein the one or more comparative insights of each of the one or more application characteristics comprises one or more of (i) a quantitative structure and (ii) one or more textual characteristics insights (306b);
generating one or more baseline configurations, based on the one or more comparative insights of each of the one or more application characteristics of each of the one or more cloud applications (306c); and
filtering the plurality of cloud architecture configuration specifications, using the one or more baseline configurations, to obtain the one or more filtered cloud architecture configuration specifications (306d).

5. The processor-implemented method (300) as claimed in claim 1, wherein the trained adaptive neural network model is obtained by:
extracting (i) the one or more application characteristics, (ii) the one or more application parameters, (iii) one or more machine configuration specifications, and (iv) a labelled execution time, of each of the one or more cloud applications, from the one or more cloud application profiling documents, using one or more large language models (LLMs) (308a); and
training an adaptive neural network model with (i) the one or more application characteristics, (ii) the one or more application parameters, (iii) the one or more machine configuration specifications, and (iv) the labelled execution time, of each of the one or more cloud applications, to obtain a trained adaptive neural network model, wherein the adaptive neural network model comprises an input layer, a hidden layer, and a final output layer, wherein the input layer further comprises a first sub-input layer, a second sub-input layer, and a third sub-input layer, and wherein each of the first sub-input layer, the second sub-input layer, and the third sub-input layer comprises a sub-input processor, a generalized input feature vector, sub-hidden layer, and a sub-output layer (308b), and wherein the training process comprises:
passing (i) the one or more application characteristics, (ii) the one or more application parameters, and (iii) the one or more machine configuration specifications, of each of the one or more cloud applications at a time, to the first sub-input layer, the second sub-input layer, and the third sub-input layer, to obtain a first intermediate weighted vector, a second intermediate weighted vector, and a third intermediate weighted vector, respectively (308b1);
passing the first intermediate weighted vector, the second intermediate weighted vector, and the third intermediate weighted vector, to the hidden layer, to obtain a combined weighted vector (308b2);
passing the combined weighted vector to the final output layer to obtain a predicted execution time of each of the one or more cloud applications (308b3);
calculating a value of a loss function of the adaptive neural network model, based on the labelled execution time and the predicted execution time of each of the one or more cloud applications (308b4); and
backpropagating and updating one or more network weights of the adaptive neural network model, based on the value of the loss function of the adaptive neural network model (308b5).

6. The processor-implemented method (300) as claimed in claim 5, wherein the one or more machine configuration specifications of each of the one or more cloud applications comprises one or more of: (i) one or more available compute resource parameters, (ii) one or more memory resource parameters, (iii) one or more storage resource parameters, and (iv) one or more network resource parameters.

7. A system (100), comprising:
a memory (102) storing instructions;
one or more input/output (I/O) interfaces (106); and
one or more hardware processors (104) coupled to the memory (102) via the one or more I/O interfaces (106), wherein the one or more hardware processors (104) are configured by the instructions to:
receive via the one or more I/O interfaces (106), (i) one or more cloud application profiling documents associated with one or more cloud applications, and (ii) one or more application characteristics, and one or more application parameters of an input cloud application for which one or more cloud architectures are to be recommended;
generate a plurality of cloud architecture configuration specifications from one or more cloud architecture networks associated with one or more cloud architecture vendors, using a combinatorial generation algorithm, wherein each of the plurality of cloud architecture configuration specifications comprises one or more of: (i) one or more instances of number of cores, VM type, and memory size, (ii) one or more storage services consisting of file system, storage size, and (iii) one or more HPC network services;
filter the plurality of cloud architecture configuration specifications, based on the one or more cloud application profiling documents, to obtain one or more filtered cloud architecture configuration specifications;
predict an application execution time of the input cloud application against each of the one or more filtered cloud architecture configuration specifications, using the one or more application characteristics, and the one or more application parameters of the input application, by employing a trained adaptive neural network model;
calculate an application cost of the input cloud application against each of the one or more filtered cloud architecture configuration specifications, based on the application execution time and a base rate of each of the one or more filtered cloud architecture configuration specifications;
determine an application score of the input cloud application against each of the one or more filtered cloud architecture configuration specifications, based on the application execution time and the application cost, using a weighted function; and
recommend the one or more cloud architectures for the input cloud application, using the one or more filtered cloud architecture configuration specifications, based on the application score.

8. The system (100) as claimed in claim 7, wherein:
(i) the one or more application characteristics comprise one or more of: one or more central processing unit (CPU)-related resource utilization metrics, one or more memory-related resource utilization metrics, one or more cache-related resource utilization metrics, one or more time-related resource utilization metrics, one or more storage related metrics, one or more network related metrics, and one or more performance related metrics, and
(ii) the one or more application parameters comprise one or more of: an input workload size, a batch size, and number of iterations.

9. The system (100) as claimed in claim 7, wherein the one or more hardware processors (104) are configured by the instructions to generate the plurality of cloud architecture configuration specifications from the one or more cloud architecture networks associated with the one or more cloud architecture vendors, using the combinatorial generation algorithm, by:
fetching one or more virtual machine (VM) instances, from each of the one or more cloud architecture networks associated with each of the one or more cloud architecture vendors;
extracting one or more base configuration specifications and one or more vendor specific features for each of the one or more virtual machine (VM) instances, to form a plurality of VM configuration specifications;
fetching one or more storage service instances and one or more network service specific instances, from each of the one or more cloud architecture networks associated with each of the one or more cloud architecture vendors, to form a plurality of storage configuration specifications and a plurality of network configuration specifications, respectively;
generating a plurality of VM-storage-network combination configuration specifications, from the plurality of VM configuration specifications, the plurality of storage configuration specifications, and the plurality of network configuration specifications, using the combinatorial generation algorithm; and
applying one or more validation constraints on the plurality of VM-storage-network combination configuration specifications to generate the plurality of cloud architecture configuration specifications.

10. The system (100) as claimed in claim 7, wherein the one or more hardware processors (104) are configured by the instructions to filter the plurality of cloud architecture configuration specifications, based on the one or more cloud application profiling documents, to obtain the one or more filtered cloud architecture configuration specifications, by:
extracting the one or more application characteristics and the one or more application parameters of each of the one or more cloud applications, from the one or more cloud application profiling documents, using one or more large language models (LLMs);
generating one or more comparative insights of each of the one or more application characteristics by analyzing the one or more application characteristics and the one or more application parameters of each of the one or more cloud applications, using the one or more LLMs, wherein the one or more comparative insights of each of the one or more application characteristics comprises one or more of (i) a quantitative structure and (ii) one or more textual characteristics insights;
generating one or more baseline configurations, based on the one or more comparative insights of each of the one or more application characteristics of each of the one or more cloud applications; and
filtering the plurality of cloud architecture configuration specifications, using the one or more baseline configurations, to obtain the one or more filtered cloud architecture configuration specifications.

11. The system (100) as claimed in claim 7, wherein the one or more hardware processors (104) are configured to obtain the trained adaptive neural network model, by:
extracting (i) the one or more application characteristics, (ii) the one or more application parameters, (iii) one or more machine configuration specifications, and (iv) a labelled execution time, of each of the one or more cloud applications, from the one or more cloud application profiling documents, using one or more large language models (LLMs); and
training an adaptive neural network model with (i) the one or more application characteristics, (ii) the one or more application parameters, (iii) the one or more machine configuration specifications, and (iv) the labelled execution time, of each of the one or more cloud applications, to obtain a trained adaptive neural network model, wherein the adaptive neural network model comprises an input layer, a hidden layer, and a final output layer, wherein the input layer further comprises a first sub-input layer, a second sub-input layer, and a third sub-input layer, and wherein each of the first sub-input layer, the second sub-input layer, and the third sub-input layer comprises a sub-input processor, a generalized input feature vector, sub-hidden layer, and a sub-output layer, and wherein the training process comprises:
passing (i) the one or more application characteristics, (ii) the one or more application parameters, and (iii) the one or more machine configuration specifications, of each of the one or more cloud applications at a time, to the first sub-input layer, the second sub-input layer, and the third sub-input layer, to obtain a first intermediate weighted vector, a second intermediate weighted vector, and a third intermediate weighted vector, respectively;
passing the first intermediate weighted vector, the second intermediate weighted vector, and the third intermediate weighted vector, to the hidden layer, to obtain a combined weighted vector;
passing the combined weighted vector to the final output layer to obtain a predicted execution time of each of the one or more cloud applications;
calculating a value of a loss function of the adaptive neural network model, based on the labelled execution time and the predicted execution time of each of the one or more cloud applications; and
backpropagating and updating one or more network weights of the adaptive neural network model, based on the value of the loss function of the adaptive neural network model.

12. The system (100) as claimed in claim 11, wherein the one or more machine configuration specifications of each of the one or more cloud applications comprises one or more of: (i) one or more available compute resource parameters, (ii) one or more memory resource parameters, (iii) one or more storage resource parameters, and (iv) one or more network resource parameters.

13. One or more non-transitory machine-readable information storage mediums comprising one or more instructions which when executed by one or more hardware processors cause:
receiving via the one or more I/O interfaces, (i) one or more cloud application profiling documents associated with one or more cloud applications, and (ii) one or more application characteristics, and one or more application parameters of an input cloud application for which one or more cloud architectures are to be recommended;
generating a plurality of cloud architecture configuration specifications from one or more cloud architecture networks associated with one or more cloud architecture vendors, using a combinatorial generation algorithm, wherein each of the plurality of cloud architecture configuration specifications comprises one or more of: (i) one or more instances of number of cores, VM type, and memory size, (ii) one or more storage services consisting of file system, storage size, and (iii) one or more HPC network services;
filtering the plurality of cloud architecture configuration specifications, based on the one or more cloud application profiling documents, to obtain one or more filtered cloud architecture configuration specifications;
predicting an application execution time of the input cloud application against each of the one or more filtered cloud architecture configuration specifications, using the one or more application characteristics, and the one or more application parameters of the input application, by employing a trained adaptive neural network model;
calculating an application cost of the input cloud application against each of the one or more filtered cloud architecture configuration specifications, based on the application execution time and a base rate of each of the one or more filtered cloud architecture configuration specifications;
determining an application score of the input cloud application against each of the one or more filtered cloud architecture configuration specifications, based on the application execution time and the application cost, using a weighted function; and
recommending the one or more cloud architectures for the input cloud application, using the one or more filtered cloud architecture configuration specifications, based on the application score.

14. The one or more non-transitory machine-readable information storage mediums as claimed in claim 13, wherein:
(i) the one or more application characteristics comprise one or more of: one or more central processing unit (CPU)-related resource utilization metrics, one or more memory-related resource utilization metrics, one or more cache-related resource utilization metrics, one or more time-related resource utilization metrics, one or more storage related metrics, one or more network related metrics, and one or more performance related metrics, and
(ii) the one or more application parameters comprise one or more of: an input workload size, a batch size, and number of iterations.

15. The one or more non-transitory machine-readable information storage mediums as claimed in claim 13, wherein the one or more instructions which when executed by one or more hardware processors further cause generating the plurality of cloud architecture configuration specifications from the one or more cloud architecture networks associated with the one or more cloud architecture vendors, using the combinatorial generation algorithm, by:
fetching one or more virtual machine (VM) instances, from each of the one or more cloud architecture networks associated with each of the one or more cloud architecture vendors;
extracting one or more base configuration specifications and one or more vendor specific features for each of the one or more virtual machine (VM) instances, to form a plurality of VM configuration specifications;
fetching one or more storage service instances and one or more network service specific instances, from each of the one or more cloud architecture networks associated with each of the one or more cloud architecture vendors, to form a plurality of storage configuration specifications and a plurality of network configuration specifications, respectively;
generating a plurality of VM-storage-network combination configuration specifications, from the plurality of VM configuration specifications, the plurality of storage configuration specifications, and the plurality of network configuration specifications, using the combinatorial generation algorithm; and
applying one or more validation constraints on the plurality of VM-storage-network combination configuration specifications to generate the plurality of cloud architecture configuration specifications.
